# EUROPÄISCHE PATENTSCHRIFT

(11) **EP 3 006 507 B1**
(45) Veröffentlichungstag und Bekanntmachung des Hinweises auf die Patenterteilung: **19.12.2018**
(21) Anmeldenummer: 15185779.4
(22) Anmeldetag: 18.09.2015
(51) Int. Cl.: C08J 5/00, C08K 7/14, C08L 77/06

(54) **VERSTÄRKTE POLYAMIDFORMMASSEN SOWIE DARAUS HERGESTELLTE SPRITZGUSSTEILE**
REINFORCED POLYAMIDE MOULDING MATERIAL AND INJECTION MOULDING PARTS MADE FROM THE SAME
MATIERE A MOULER EN POLYAMIDE RENFORCE ET PIECES MOULEES EN ETANT FABRIQUEES

(30) Priorität: 10.10.2014 EP 14188504
(43) Veröffentlichungstag der Anmeldung: 13.04.2016
(73) Patentinhaber: EMS-PATENT AG, 7013 Domat / Ems (CH)
(72) Erfinder: KOCH, Felix, 8808 Pfäffikon SZ (CH); HARDER, Philipp, 7000 Chur (CH); HOFFMANN, Botho, 7013 Domat/Ems (CH)
(74) Vertreter: Bremi, Tobias Hans

(56) Entgegenhaltungen:
- EP-A1- 1 942 147
- EP-A1- 2 060 607
- WO-A2-2014/100000
- US-A1- 2013 203 910
- US-A1- 2014 031 476
- DATABASE CA [Online] CHEMICAL ABSTRACTS SERVICE, COLUMBUS, OHIO, US; 31. Mai 1992 (1992-05-31), NAKAJIMA, TAKASHI ET AL: "Heat-resistant polyamide molding compositions", XP002737289, gefunden im STN Database accession no. 1992:215725 -& JP H03 269056 A (MITSUBISHI KASEI CORP.) 29. November 1991 (1991-11-29)

## Beschreibung

### TECHNISCHES GEBIET

Die vorliegende Erfindung betrifft verstärkte Polyamidformmassen, enthaltend Mischungen aus bevorzugt niedrigviskosen Polyamiden und Glasfasern, vorzugsweise mit flacher Gestalt, insbesondere Glasfasern mit nicht kreisförmiger Querschnittsfläche und einem Abmessungsverhältnis von der Haupt-Querschnittsachse zur Neben-Querschnittsachse von zwischen 2 und 5. Die vorliegende Erfindung betrifft weiterhin ein Verfahren zur Herstellung der Polyamidformmassen sowie daraus gefertigte Formteile, d. h. insbesondere Spritzgussteile.

### STAND DER TECHNIK

Verstärkte Polyamide spielen eine zunehmende Rolle im Bereich der technischen Konstruktionswerkstoffe, da sie neben hoher Steifigkeit, eine gute Zähigkeit und Wärmeformbeständigkeit zeigen. Einsatzgebiete sind, z. B. Innen- und Aussenteile im Automobilsektor und im Bereich von anderen Transportmitteln, Gehäusematerial für Geräte und Apparate für die Telekommunikation, Unterhaltungselektronik, Haushaltsapparate, Maschinenbauapparate, Apparate im Heizungsbereich und Befestigungsteile für Installationen. Wichtig sind bei Teilen z. B. im Automobilsektor metallähnliche Eigenschaften, die aber nur durch hochgefüllte, verstärkte Formmassen erzielt werden. Bei dünnwandigen Teilen ist dabei insbesondere eine hohe Fliesslänge der Formmassen notwendig, die allerdings bei mit Endlosfasern verstärkten Formmassen nicht oder sehr schlecht erzielt werden kann.

Der besondere Vorteil von verstärkten Polyamiden liegt ausserdem im aussergewöhnlich guten Verbund zwischen Polymermatrix und Verstärkungsstoffen. Dies gilt auch bei hohen Verstärkungsgraden, die zu Produkten mit hohem Zug-E-Modul führen. Die Zähigkeit der bekannten Produkte genügt allerdings nicht allen Anforderungen.

EP-A-0 190 011 beschreibt Glasfasern mit elliptischem oder rechteckigem Querschnitt sowie deren Herstellung. Der Einsatz dieser speziellen Glasfasern zur Herstellung von Composite-Teilen wird erwähnt. Aufgrund der grösseren Oberfläche der Fasern ergeben sich höhere Festigkeitswerte in Composites.

EP-A-0 196 194 beschreibt einen Strang, bestehend aus einer Vielzahl von Einzelfilamenten aus Glas, die einen nicht kreisförmigen Querschnitt aufweisen, sowie deren Herstellung. Der Querschnitt der Glasfasern kann oval, elliptisch, kokonförmig oder polygonal sein.

EP-A-0 199 328 beschreibt ein Gewebe für Leiterplatten, das im Wesentlichen aus Glasfasern mit nicht kreisförmigem Querschnitt zusammengesetzt ist. Die Einzelfasern haben ovalen, länglichen oder elliptischen Querschnitt. Als Matrices für dieses Gewebe werden ungesättigte Polyesterharze, Epoxyharze, Phenolharze, Polyimidharze oder PTFE beschrieben.

EP-A-0 246 620 beschreibt einen Gegenstand aus einem glasfaserverstärkten thermoplastischen Kunststoff, wobei die Glasfasern einen rechteckigen, elliptischen oder hüllenförmigen Querschnitt aufweisen. Es wird aufgezeigt, dass Glasfasern mit nicht kreisförmigem Querschnitt Vorteile hinsichtlich der Festigkeit und der Zähigkeit gerade bei hohem Verstärkungsgrad (60%) aufweisen.

EP-A-0 376 616 beschreibt eine thermoplastische Polymerzusammensetzung, umfassend einen thermoplastischen Kunststoff und 1 bis 65 % einer faserartigen Verstärkung mit einem nicht kreisförmigen Querschnitt, wobei die Querschnittsfläche und das Verhältnis der senkrecht zueinander stehenden Querschnittsachsen der Verstärkungsfasern näher charakterisiert sind. Der Querschnitt der Verstärkungsfasern weist eine gekrümmte oder halbrunde Kontur auf. Die Zusammensetzung zeichnet sich durch eine hohe Dimensionsstabilität und geringeren Verzug aus.

EP-A-0 400 935 beschreibt eine flammgeschützte faserverstärkte Polyester-Zusammensetzung, die 1 bis 60 Gew.-% Glasfasern enthält. Gemäss EP-A-0 400 935 weisen die eingesetzten Glasfasern eine Querschnittsform auf, die ausgewählt ist aus der Gruppe aus abgeplatteten, elliptischen, ovalen, halbrunden, gekrümmten und rechteckigen Querschnittsformen. Diese flammgeschützten verstärkten Polyesterzusammensetzungen zeigen eine verminderte Deformation, ohne dass die ihnen eigenen mechanischen Eigenschaften von kristallinen Polyesterharzen nachteilig beeinflusst werden. Es wird festgestellt, dass die Deformation, d. h. das Werfen von kristallinen Polyesterharzen reduziert werden kann, ohne dass die mechanischen Eigenschaften des Harzes, zum Beispiel die Biegefestigkeit und die Steifheit als auch die Verarbeitbarkeit reduziert werden.

Zur Reduktion des Verzugs von thermoplastisch hergestellten Formteilen wird gemäss JP-A-10219026 die Thermoplastmatrix mit einer Mischung aus Glasfasern mit kreisförmigem Querschnitt und Glasfasern mit flachem Querschnitt verstärkt. Im einzigen Beispiel dieses Dokuments wird Polyamid 66 als Polymermatrix aufgeführt.

JP-A-2004285487 beschreibt ein Glasfaserbündel, bestehend aus Glasfilamenten mit flachem Querschnitt, die durch eine nichtflüchtige Schlichte zusammengehalten werden sowie eine thermoplastische Zusammensetzung, bestehend aus 5 bis 75 % dieser Glasfaserbündel und einer Polyolefin-Matrix.

In der EP-A-1 882 719 werden Polyamidformmassen, die bei guten mechanischen Eigenschaften einen sehr geringen Verzug aufweisen, beschrieben. Erreicht wird dies durch eine Kombination von transparentem Polyamid mit faserförmigen Verstärkungsstoffen sowie partikulären Füllstoffen. Hinsichtlich der faserförmigen Verstärkungsstoffe bestehen grundsätzlich keine Beschränkungen, vorzugsweise sind diese ausgewählt aus der Gruppe, bestehend aus Glasfasern, Kohlenstofffasern, Metallfasern, Aramidfasern, Whiskers und Mischungen davon. Die Glasfasern können dabei als Endlosfasern oder als geschnittene Glasfasern zugesetzt werden. Die Glasfasern können einen runden, ovalen oder rechteckigen Querschnitt aufweisen. Gearbeitet werden dabei auch Mischungen aus aliphatischen Polyamiden mit runden Glasfasern.

Die EP-A-1 788 027 beschreibt verstärkte Polyamidformmassen aus einem Blend aus Polyamid 66 und einem Copolyamid 6T/6I. Als Verstärkungsmaterial wird eine Mischung aus Glasfasern und Kohlenstofffasern eingesetzt. Um eine weitere Erhöhung der Steifigkeit zu erhalten, wird ein Teil der Glasfasern durch Kohlenstofffasern ersetzt, so dass ein Hybridfaser verstärkter Compound zu Einsatz kommt. Unter anderem werden auch Mischungen von PA66 mit amorphem teilaromatischem Polyamid und runden Glasfasern gearbeitet. Die EP-A-1 942 147 offenbart mit flachen Glasfasern verstärkte Polyamidformmassen, wobei unter anderem Mischungen aus Polyamid 66 und amorphem Teilaromatisches Polyamid gearbeitet werden. Problematisch an diesen beiden auf Mischungen beruhenden Systemen ist die vergleichsweise hohe Wasseraufnahme und die bei Wasseraufnahme reduzierten mechanischen Eigenschaften. Für Anwendungen unter nassen oder feuchten Bedingungen sind solche Systeme also nur beschränkt einsetzbar.

### DARSTELLUNG DER ERFINDUNG

Es ist entsprechend unter anderem Aufgabe der vorliegenden Erfindung, eine Polyamidformmasse zur Verfügung zu stellen, die möglichst wenig Wasser aufnimmt (vorzugsweise weniger als 2%), eine gute Schlag- und Kerbschlagzähigkeit aufweist, während Zug-E-Modul, Bruchfestigkeit, Bruchdehnung und linearer Spritzschwund ungefähr auf gleichem Niveau sind wie bei einer auf PA66 basierenden Formmasse. D.h. Ziel ist es, die Wasseraufnahme gegenüber diesem Standard Polyamid 66 zu reduzieren und die Zähigkeit zu erhöhen, ohne die übrigen mechanischen Eigenschaften zu beeinträchtigen.

Diese Aufgabe wird durch eine verstärkte Polyamidformmasse gemäss Anspruch 1 gelöst. Konkret betrifft damit die vorliegende Erfindung eine verstärkte Polyamidformmasse bestehend aus folgenden Komponenten:
(A) 20-45 Gew.-% aliphatisches Polyamid ausgewählt aus der Gruppe PA 610 und PA 612, oder Mischungen davon;
(B) 5-15 Gew.-% teilaromatisches Polyamid ausgewählt aus der Gruppe 6I, DI, 6DI, 6I/6T, DI/DT, DI/6T, MXD6 oder Mischungen davon;
(C) 45-75 Gew.-% flache Glasfasern mit einer nicht-kreisförmigen Querschnittsfläche und einem Abmessungsverhältnis der Haupt-Querschnittsachse zur Neben-Querschnittsachse dieser Querschnittsfläche im Bereich von 2 - 5;
(D) 0-10 Gew.-% Additive;
wobei sich die Komponenten (A)-(D) auf 100 Gew.-% ergänzen.

Der Buchstabe D steht für 2-Methylpentan-1,5-diamin, während die 6 im Zusammenhang dieser Anmeldung für 1,6-Hexandiamin steht. Entsprechend steht 6I für das Polyamid gebildet durch die Polymerisation von 1.6-Hexandiamin mit Isophthalsäure, DI steht für das Polyamid gebildet durch Polymerisation von 2-Methylpentan-1,5-diamin mit Isophthalsäure. Des Weiteren steht 6DI für das Produkt der Polymerisation von 1.6-Hexandiamin, 2-Methylpentan-1,5-diamin und Isophthalsäure, wobei die Proportion zwischen 6 und D entsprechend den gewünschten Eigenschaften des Materials ausgewählt sein kann.

In gleicher Weise steht 6I/6T für das Polymer erhalten durch Reaktion von 1.6-Hexandiamin, Terephthalsäure und Isophthalsäure, wobei die Proportionen der Terephthalsäure zur Isophthalsäure entsprechend den gewünschten Eigenschaften des resultierenden Materials ausgewählt sein können. Auf der anderen Seite steht DI/DT für das Polyamid erhalten durch Reaktion von 2-Methylpentan-1,5-diamin, Terephthalsäure und Isophthalsäure, wobei wiederum die Proportionen der Terephthalsäure und der Isophthalsäure ausgewählt sein können entsprechend den gewünschten Eigenschaften des resultierenden Materials.

Das oben mit der Bezeichnung DI/6T angegebene Material soll alle Arten von Polyamidsystemen umfassen, welche aufgebaut sind aus 1.6-Hexandiamin und 2-Methylpentan-1,5-diamin als Diamin-Fraktion und Terephthalsäure und Isophthalsäure als Disäure-Fraktion. Die Proportionen innerhalb der Diamin-Fraktion als auch innerhalb der Disäure-Fraktion können ausgewählt werden in Abhängigkeit der gewünschten Eigenschaften des resultierenden Polyamids. Entsprechend, berücksichtigt man die gebildeten Bausteine in diesem Begriff DI/6T in einer detaillierteren Darstellung, so steht der Begriff für Systeme des Typs 6I/DI/6T/DT mit Proportionen der Bausteine entsprechend den gewünschten Eigenschaften des resultierenden Materials.

Bevorzugt werden als Komponente (A) und/oder (B) niedrigviskose Polyamid eingesetzt. Unter niedrigviskosen Polyamiden wird ein Polyamid mit einer Lösungsviskosität von ηᵣₑₗ kleiner 2.0, bevorzugt kleiner 1,9 (jeweils Lösung von 0.5 g Polymer gelöst in 100 ml m-Kresol, 20°C) verstanden. Der relativen Viskosität von ηᵣₑₗ kleiner 1,9 entspricht normalerweise ein Molekulargewicht (Mₙ, Zahlenmittel) der Polyamide von kleiner 20.000 g/mol.

Bevorzugtermassen liegt der Anteil der Komponente (A) im Bereich von 22-38 Gew.-%.

Das Polyamid der Komponente (A) weist vorzugsweise eine Lösungsviskosität ηᵣₑₗ im Bereich von 1.5-2.0 und besonders bevorzugt im Bereich von 1.6-1.85, gemessen an Lösungen von 0,5 g Polymer gelöst in 100 ml m-Kresol bei einer Temperatur von 20°C, auf.

Bevorzugt wird die Komponente (A) ausschliesslich durch Polyamid PA 612 gebildet. Der Anteil der Komponente (B) auf der anderen Seite liegt vorzugsweise im Bereich von 7-13 Gew.-%.

Vorzugsweise wird die Komponente (B) ausschliesslich aus wenigstens einem der Systeme 6I/6T oder DI/DT gebildet, wobei insbesondere bevorzugt ist, wenn Komponente (B) ausschliesslich aus 6I/6T gebildet wird.

Das Polyamid der Komponente (B), vorzugsweise ausgewählt als 6I/6T oder als DI/DT, verfügt vorzugsweise über eine Lösungsviskosität ηᵣₑₗ im Bereich von 1.45-1.75, bevorzugt im Bereich von 1.48 bis 1.65, gemessen an Lösungen von 0,5 g Polymer gelöst in 100 ml m-Kresol bei einer Temperatur von 20°C.

Weiterhin ist bevorzugt Komponente (B) ausschliesslich aus MXD6 (MXD=meta-Xylylendiamin) gebildet, wobei MXD6 bevorzugt eine relative Viskosität im Bereich von 2.0 bis 3.5, besonders bevorzugt im Bereich von 2.1 bis 2.8, jeweils gemessen gemäss ISO 307 an 1 %-igen Lösungen in Schwefelsäure bei 20°C, aufweist. MXD6 ist als solches teilkristallin und hat einen Schmelzpunkt von in etwa 237°C, kristallisiert aber in der erfindungsgemässen Formmasse nicht oder nur in geringem Umfang und übernimmt damit die Funktion eines amorphen Polyamids.

Gemäss einer bevorzugten Ausführungsform weist das Polyamid 6I/6T der Komponente (B), bezogen auf die Summe der 6T und 6I-Einheiten, einen Anteil an 6I-Einheiten im Bereich von 60-90 mol-%, vorzugsweise im Bereich von 65-80 mol-%, insbesondere vorzugsweise im Bereich von 65-75 mol-% auf.

Gemäss einer weiteren bevorzugten Ausführungsform ist der Anteil von DI-Einheiten im Polyamid DI/DT der Komponente (B), basierend auf der Gesamtheit von DT und DI-Einheiten, im Bereich von 60-90 mol-%, vorzugsweise im Bereich von 65-80 mol-%, insbesondere vorzugsweise im Bereich von 65-75 mol-%.

Gemäss einer weiteren bevorzugten Ausführungsform ist der Anteil von I-Einheiten im Polyamid DI/6T der Komponente (B), basierend auf der Gesamtheit von T und I enthaltenden Einheiten, im Bereich von 60-90 mol-%, vorzugsweise im Bereich von 65-80 mol-%, insbesondere vorzugsweise im Bereich von 65-75 mol-%.

Generell kann gesagt werden, dass bevorzugter Massen das Verhältnis der Komponente (A) zur Komponente (B) im Bereich von 2.7:1 bis 5:1 liegt, vorzugsweise im Bereich von 2.8:1 bis 4:1 liegt, insbesondere bevorzugt im Bereich von 2.9:1 bis 3.1:1.

Der Anteil der Komponente (C) liegt vorzugsweise im Bereich von 50-70 Gew.-%.

Das Abmessungsverhältnis der Haupt-Querschnittsachse zur Neben-Querschnittsachse dieser Querschnittsfläche der Glasfaser der Komponente (C) liegt bevorzugter Massen im Bereich von 2.5-4.5, vorzugsweise im Bereich von 2.8-4.2, insbesondere vorzugsweise im Bereich von 2.9-3.2.

Die Glasfasern der Komponente (C) können eine Neben-Querschnittsachse einer Länge im Bereich von 5-10 µm und eine Haupt-Querschnittsachse einer Länge im Bereich von 15-30 µm aufweisen.

Bei den Glasfasern der Komponente (C) handelt es sich bevorzugter Massen um E-Glasfasern. E-Glasfasern bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid. E-Glasfasern haben eine Dichte von 2.54 - 2.62 g/cm³, einen Zug-E-Modul von 70 - 75 GPa, eine Zugfestigkeit von 3000 - 3500 MPa und eine Reissdehnung von 4.5 - 4.8%, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Bei der Komponente (C) kann es sich um Glasfasern in Form von Schnittglas mit einer Länge im Bereich von 1-20 mm, insbesondere vorzugsweise einer Länge im Bereich von 2-5 mm.

Als Komponente (D) können Additive aus der folgenden Gruppe ausgewählt werden: anorganische Stabilisatoren, organische Stabilisatoren, Gleitmittel, Farbstoffe, Nukleierungsmittel, Metallflitter, halogenhaltige Flammschutzmittel, halogenfreie Flammschutzmittel, Schlagzähmodifikatoren, Antistatika, Leitfähigkeitsadditive, Entformungsmittel, optische Aufheller, Haftvermittlern, Alterungsschutzmittel, Antioxidantien, Antiozonantien, Lichtschutzmittel, UV-Stabilisatoren, UV-Absorber, UV-Blocker, anorganische Hitzestabilisatoren, insbesondere auf Basis von Kupferhalogeniden und Alkalihalogeniden, organische Hitzestabilisatoren, Leitfähigkeitsadditive, optische Aufhellern, Verarbeitungshilfsmittel, Kristallisationsbeschleuniger, Kristallisationsverzögerer, Fliesshilfsmittel, Gleitmittel, Entformungsmittel und Mischungen davon.

Im Rahmen der Additive (D) können auch faserförmige Zuschlagstoffe verschieden von Komponente (C) Einsatz finden. Möglich sind beispielsweise Kohlenstofffasern, Metallfasern, Aramidfasern, Nanotubes, insbesondere Carbon Nanotubes (CNT), Whiskers, oder auch Glasfasern mit runder Querschnittsfläche, und Mischungen oder oberflächenbehandelte Formen davon.

Ebenfalls möglich im Rahmen der Additive (D) sind teilchenförmige Zuschlagsstoffe wie beispielsweise Russ, Silikate, einschliesslich natürliche Schichtsilikate, synthetische Schichtsilikate, einschliesslich Eisenaluminiumsilikat- und/oder Natriumaluminiumsilikat-Partikel, metallische Pigmente, Talk, Glimmer, Quarz, Quarzmehl, gemahlenes Glas, gemahlene Glasfasern, Glasschuppen, Glasflocken, Titandioxid, Zinksulfid, Wollastonit, Kaolin, Kieselsäuren, Magnesiumcarbonat, Magnesiumhydroxid, Kreide, gemahlenes oder gefälltes Calciumcarbonat, Kalk, Feldspat, Bariumsulfat, permanentmagnetische oder magnetisierbare Metalle oder Legierungen, Glaskugeln, Hohlglaskugeln, hohlkugeligen Silikatfüllstoffe, anorganische Pigmente, wie insbesondere Eisenoxid, Eisenmanganoxid, Metallpulver einschliesslich Eisenpulver, Kupferpulver, Aluminiumpulver, Metallflocken einschliesslich Aluminiumflocken, Eisenflocken, metallbeschichtete Füllstoffe, Metalloxide, einschliesslich Spinelle, wie insbesondere Kupfereisenspinell, Kupferchromoxid, Kupferchromit (CuCr2O4), Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metalle oder Legierungen bzw. Keramiken, hohlkugelige Silikatfüllstoffen, Aluminiumoxid, Bornitrid, Borcarbid, Aluminiumnitrid, Calciumfluorid und Mischungen oder oberflächenbehandelte Formen davon.

Zudem betrifft die vorliegende Erfindung ein Verfahren zur Herstellung einer Polyamidformmasse wie oben dargestellt, insbesondere auf einer Compoundieranlage mit einer Zylindertemperatur im Bereich von 260-320 °C, dadurch gekennzeichnet, dass vorzugsweise zunächst die Komponenten (A) und (B) sowie gegebenenfalls Polymere der Komponente (D) aufgeschmolzen werden und dann die Komponente (C) sowie gegebenenfalls die Komponente (D) hinzugefügt werden.

Des Weiteren betrifft die vorliegende Erfindung eine Verwendung einer Formmasse wie sie oben dargestellt wurde bevorzugter Massen mit einer Wasseraufnahme von unter 2.5 %, vorzugsweise unter 2 %, jeweils gemessen bei 23 °C und 100 % relative Luftfeuchtigkeit, zur Herstellung von Formkörpern, insbesondere von Spritzgussteilen. Zu guter letzt betrifft die vorliegende Erfindung einen Formkörper erhalten oder erhältlich aus einer Polyamidformmasse, wie sie oben dargestellt wurde, bevorzugt in Form eines Gehäuses, insbesondere eines Gehäuses für ein tragbares Gerät, insbesondere bevorzugt einen Computer, Tablet Computer, Fotoapparat, Kommunikationsgerät, Ortungsgerät, Mobiltelefon, Phablet (kombiniert Funktionen von Smartphone und Tablet-PC) oder Teile davon.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Beispiele beschrieben, die lediglich zur Erläuterung dienen und nicht einschränkend auszulegen sind. Die Formmassen der Zusammensetzungen in den Tabellen 1 und 2 wurden auf einem Zweiwellenextruder der Fa. Werner u. Pfleiderer Typ ZSK 25 hergestellt. Die Granulate der Polyamide PA Typ-A bis PA Typ-D sowie die Komponenten (B) und (D) wurden gemischt und in die Einzugszone dosiert. Die Glasfaser (Komponente (C)) wurde über einen Sidefeeder 3 Gehäuseeinheiten vor der Düse in die Polymerschmelze dosiert.

Die Gehäusetemperatur wurde als aufsteigendes Profil bis 280°C eingestellt. Bei 150 bis 200 UPM wurden 10 kg Durchsatz erreicht. Die Compounds wurden als Strang aus einer Düse mit 3 mm Durchmesser abgezogen und nach Wasserkühlung granuliert. Danach wurde das Granulat bei 100°C für 24h im Vakuum bei 30 mbar getrocknet.

Die Prüfkörper wurden auf einer Arburg Spritzgiessanlage Allrounder 320-210-750 hergestellt, wobei die Zylindertemperaturen im Bereich von 260°C bis 300°C, die Formtemperatur auf 90 - 120°C und die Schneckenumfangsgeschwindigkeit auf 15m/min eingestellt wurden.
- PA Typ A:: Polyamid PA612 mit einer Lösungsviskosität von ηᵣₑₗ = 1.80 (Lösung von 0.5 g Polymer gelöst in 100 ml m-Kresol, 20°C)) und einem Schmelzpunkt von 217°C, hergestellt durch EMS-CHEMIE AG, Schweiz.
- PA Typ B:: Polyamid PA614 mit einer Lösungsviskosität von ηᵣₑₗ = 1.78 (Lösung von 0.5 g Polymer gelöst in 100 ml m-Kresol, 20°C) und einem Schmelzpunkt von 210°C, hergestellt durch EMS-CHEMIE AG, Schweiz.
- PA Typ C:: Radipol A45, Polyamid PA66 mit einer Lösungsviskosität von 2.7 (1.0 Gew.-% in Schwefelsäure, 20°C, ISO 307), einer Viskositätszahl von 150 (mittleres Molekulargewicht von ca. 20'000- 21'000 g/mol) und einem Schmelzpunkt von 260°C, RADICI, Italien.
- PA Typ D:: Amorphes Polyamid PA6T/6I (33:67) auf Basis von TPS, IPS und HMDA, Tg = 125°C, ηᵣₑₗ = 1.54 (Lösung von 0.5 g Polymer gelöst in 100 ml m-Kresol, 20°C), ΔHm < 4 J/g, hergestellt durch EMS-CHEMIE AG, Schweiz.
- PA Typ E:: Polyamid PA610 mit einer Lösungsviskosität von ηᵣₑₗ = 1.75 (Lösung von 0.5 g Polymer gelöst in 100 ml m-Kresol, 20°C) und einem Schmelzpunkt von 224°C, hergestellt durch EMS-CHEMIE AG, Schweiz.
- PA Typ F:: Polyamid MXD6 mit einer Lösungsviskosität ηᵣₑₗ = 1.68 (Lösung von 0.5 g Polymer in 100 ml von m-Kresol, 20°C) und einem Schmelzpunkt von 240°C, hergestellt von Mitsubishi Gas Chemical, Japan.
- PA Typ G:: amorphes Polyamid PA DT/DI (60:40) basierend auf TPS, IPS und 2-Methylpentandiamin, Tg = 145°C, ηᵣₑₗ = 1.44 (Lösung von 0.5 g of Polymer in 100 ml von m-Kresol, 20°C), ΔHm < 4 J/g, hergestellt durch Invista, USA.
- Glasfasern :: CPIC ECS 301 T, 3 mm lang, 24 µm breit, 8 µm dick, Aspektverhältnis der Querschnittsachsen = 3, CPIC, China (Flache Glasfaser).

Die Messungen wurden nach folgenden Normen und an folgenden Prüfkörpern durchgeführt:
Werden die Prüfkörper im trockenen Zustand verwendet, werden sie nach dem Spritzguss mindestens 48 h bei Raumtemperatur in trockener Umgebung, d.h. über Silicagel gelagert. Konditionierte Prüfkörper werden nach ISO 1110 für 14 Tage bei 72 °C und 62 % relativer Feuchte gelagert.

Das **thermische Verhalten** (Schmelzpunkt (T_{M}), Schmelzenthalpie (ΔHm), Glasumwandlungstemperatur (Tg)) wurde anhand der ISO-Norm 11357-1/-2 am Granulat bestimmt. Die Differential Scanning Calorimetry (DSC) wurde mit Aufheizrate von 20 °C/min durchgeführt.

Die **relative Viskosität** (ηᵣₑₗ) wurde bestimmt nach DIN EN ISO 307 an Lösungen von 0,5 g Polymer gelöst in 100 ml m-Kresol bei einer Temperatur von 20°C. Als Probe wird Granulat verwendet.

**Zug-E-Modul, Bruchfestigkeit und Bruchdehnung:** Zug-E-Modul, Bruchfestigkeit und Bruchdehnung wurden nach ISO 527 mit einer Zuggeschwindigkeit von 1mm/min (Zug-E-Modul) bzw. mit einer Zuggeschwindigkeit von 5 mm/min (Bruchfestigkeit, Bruchdehnung) am ISO-Zugstab, Norm ISO/CD 3167, Typ A1, 170 x 20/10 x 4mm bei Temperatur 23°C bestimmt.

**Schlagzähigkeit und Kerbschlagzähigkeit** nach Charpy wurden nach ISO 179/keU am ISO-Prüfstab, Norm ISO/CD 3167, Typ B1, 80 x 10 x 4mm bei einer Temperatur von 23°C gemessen.

Die **Verarbeitungsschwindung** (Linearer Spritzschwund längs/quer) wurde gemäss ISO 294-4 an einer Platte, Typ D2, 60 x 60 x 2 mm (gemäss Norm ISO 294-3) bestimmt. Die Platten wurden mit den zuvor angegebenen Masse- und Werkzeugtemperaturen hergestellt. Sie wurden vor der Messung 48 h im Normraumklima (20°C, 50% rel. Feuchte) gelagert. Die Verarbeitungsschwindung wurde längs und quer zur Fliessrichtung in Bezug auf die Formnestgrösse bestimmt. Angegeben wird der arithmetische Mittelwert aus den Messungen an 5 Platten.

Die **Wasseraufnahme** wurde nach ISO 62 an Platten der Dimension 80x80x1 mm bei einer Temperatur von 23 °C bestimmt. Bei 100 % relativer Feuchte werden die Platten solange gelagert, bis keine Gewichtszunahme mehr stattfindet.

**Tabelle 1:**

| ***Zusammensetzung*** | **Einheit** | | **B1** | **B2** | **VB1** | **VB2** |
|---|---|---|---|---|---|---|
| PA Typ A (612) | Gew.-% | | 37.5 | 33.75 | | |
| PA Typ B (614) | Gew.-% | | | | 37.5 | |
| PA Typ C (66) | Gew.-% | | | | | 37.5 |
| PA Typ D (6I/6T) | Gew.-% | | 12.5 | 11.25 | 12.5 | 12.5 |
| Glasfaser | Gew.-% | | 50 | 55 | 50 | 50 |

| ***Eigenschaften*** | | | | | | |
|---|---|---|---|---|---|---|
| Zug-E-Modul | GPa | t. | 15.5 | 17.5 | 14.8 | 18.0 |
| | | k. | 14.5 | 16.4 | 14.2 | 17.0 |
| Bruchspannung | MPa | t. | 228 | 243 | 210 | 250 |
| | | k. | 198 | 213 | 190 | 220 |
| Bruchdehnung | % | t. | 3.0 | 3.0 | 3.0 | 2.5 |
| | | k. | 3.2 | 2.9 | 3.0 | 2.5 |
| Schlagzähigkeit 23 °C | kJ/m² | t. | 100 | 114 | 90 | 71 |
| | | k. | 105 | 104 | 95 | 73 |
| Kerbschlagzähigkeit 23°C | kJ/m² | t. | 22 | 23 | 16 | 15 |
| | | k. | 21 | 22 | 16 | 15 |
| Lin. Spritzschwund längs | [%] | | - | 0.02 | - | 0.06 |
| Lin. Spritzschwund quer | [%] | | - | 0.38 | - | 0.48 |
| Wasseraufnahme (23°C, 100% rel. Feuchte) | % | | 1.9 | 1.7 | 1.6 | 4.0 |

| | | | | | | |
|---|---|---|---|---|---|---|
| t. = trocken, k.= konditioniert | | | | | | |

**Tabelle 2:**

| ***Zusammensetzung*** | ***Einheit*** | | **B3** | **B4** | **VB3** | **B5** | **VB4** | **B6** |
|---|---|---|---|---|---|---|---|---|
| PA Typ A (612) | Gew.-% | | 30 | 26.25 | | 22.5 | | |
| PA Typ E (610) | Gew.-% | | | | | | | 33.75 |
| PA Typ C (66) | Gew.-% | | | | 30 | | 22.5 | |
| PA Typ D (6I/6T) | Gew.-% | | 10 | 8.75 | 10 | 7.5 | 7.5 | 11.25 |
| Glasfaser | Gew.-% | | 60 | 65 | 60 | 70 | 70 | 55 |

| ***Eigenschaften*** | | | | | | | | |
|---|---|---|---|---|---|---|---|---|
| Zug-E-Modul | GPa | t. | 19.6 | 23.5 | 22.5 | 27 | 28 | 17.6 |
| | | k. | 18.5 | 22.5 | 22 | 26 | 27.5 | 17.3 |
| Bruchspannung | MPa | t. | 253 | 265 | 270 | 265 | 259 | 223 |
| | | k. | 223 | 240 | 260 | 225 | 260 | 205 |
| Bruchdehnung | % | t. | 2.7 | 1.9 | 1.9 | 1.5 | 1.4 | 2.8 |
| | | k. | 2.8 | 1.9 | 2.0 | 1.4 | 1.5 | 3.0 |
| Schlagzähigkeit 23°C | kJ/m² | t. | 99 | 85 | 74 | 72 | 58 | 95 |
| | | k | 118 | 77 | 67 | 70 | 60 | 92 |
| Kerbschlagzähigke it 23°C | kJ/m² | t. | 19 | 20 | 15 | 21 | 14 | 21 |
| | | k. | 21 | 22 | 15 | 22 | 15 | 22 |
| Lin. Spritzschwundlängs | % | | - | 0.08 | 0.06 | 0.10 | 0.12 | - |
| Lin. Spritzschwundquer | % | | - | 0.31 | 0.41 | 0.32 | 0.31 | - |
| Wasseraufnahme (23°C, 100% rel. Feuchte) | % | | 1.6 | 1.5 | 3.5 | 1.3 | 2.9 | 2.0 |

| | | | | | | | | |
|---|---|---|---|---|---|---|---|---|
| t. = trocken, k.= konditioniert | | | | | | | | |

**Tabelle 3:**

| ***Zusammensetzung*** | ***Einheit*** | **B7** | **VB5** | **B8** | **VB6** | **B9** | **VB7** | **B10** |
|---|---|---|---|---|---|---|---|---|
| PA A (612) | Gew.-% | | | 37.5 | | 30 | | 37.5 |
| PA E (610) | Gew.-% | 37.5 | | | | | | |
| PA C (66) | Gew.-% | | 37.5 | | 30 | | 37.5 | |
| PA F (MXD6) | Gew.-% | 12.5 | 12.5 | 12.5 | 10 | 10 | | |
| PA G (DI/DT) | Gew.-% | | | | | | 12.5 | 12.5 |
| Glass fibre | Gew.-% | 50 | 50 | 50 | 60 | 60 | 50 | 50 |

| ***Properties*** | | | | | | | | |
|---|---|---|---|---|---|---|---|---|
| Zug-E-Modul | GPa | 16.1 | 18.1 | 16.0 | 22.4 | 20.8 | 18 | 16.2 |
| Tensile strength at break | MPa | 232 | 261 | 230 | 268 | 249 | 255 | 230 |
| Bruchspannung | % | 2.8 | 2.4 | 2.9 | 2.0 | 2.5 | 2.6 | 3.0 |
| Impact resistance at 23°C | kJ/m² | 95 | 90 | 100 | 80 | 92 | 70 | 95 |
| Bruchdehnung | kJ/m² | 21 | 20 | 22 | 16 | 19 | 14 | 21 |
| Wasseraufnahme (23°C, 100% rel. Feuchte) | % | 2.2 | 4.0 | 1.9 | 3.4 | 1.6 | 4.1 | 2.0 |

Um die Steifigkeit der erfindungsgemässen Formmasse an diejenige des Standards PA66 anzupassen, wurde der Glasfaser bei den tieferen Konzentrationen im Bereich bis 60 Gew.-% um 5% erhöht. Daher ist es aus dem Blickwinkel der Aufgabenstellung richtig, eine erfindungsgemässe Formmasse mit einem Glasfaser von 55 oder 65% mit einer Standard-Formmasse zu vergleichen, die lediglich 50 oder 60 Gew.-% Glasfaser enthält.

So besitzen die Formmassen von B2 und VB2 eine nahezu gleiche Steifigkeit und Bruchfestigkeit. B2 zeichnet sich aber durch eine deutlich bessere Schlagzähigkeit und Kerbschlagzähigkeit sowie geringere Wasseraufnahme aus.

Durch den höheren aliphatischen Anteil im PA614 gegenüber PA612 hat VB1 zwar eine nochmals reduzierte Wasseraufnahme, aber die Schlagzähigkeit und Kerbschlagzähigkeit ist deutlich niedriger.

Das gleiche Bild ergibt sich bei den höheren Glasfaserkonzentrationen im Vergleich von B4 mit VB3 und B5 mit VB4, auch hier haben die erfindungsgemässen Formmassen bei nahezu gleichem E-Modul eine deutlich bessere Schlagzähigkeit und Kerbschlagzähigkeit und die Wasseraufnahme liegt um 1.6 bis 2.0 % niedriger.

Die Wasseraufnahme von PA 6I/6T (2/1) beträgt 2 Gew.-% bei 23 °C und 50 % relativer Feuchte bzw. 7 Gew.-% bei 23 °C und 100 % relativer Feuchte. D.h. das amorphe Polyamid trägt nichts zur Reduzierung der Wasseraufnahme bei.

## Patentansprüche

1. Verstärkte Polyamidformmasse bestehend aus folgenden Komponenten:
(A) 20-45 Gew.-% aliphatisches Polyamid ausgewählt aus der Gruppe bestehend aus: PA 610, PA 612 oder Mischungen davon;
(B) 5-15 Gew.-% teilaromatisches Polyamid ausgewählt aus der Gruppe bestehend aus: 6I, DI, 6I/6T, DI/DT, DI/6T, MXD6 oder Mischungen davon;
(C) 45-75 Gew.-% flache Glasfasern mit einer nicht-kreisförmigen Querschnittsfläche und einem Abmessungsverhältnis der Haupt-Querschnittsachse zur Neben-Querschnittsachse dieser Querschnittsfläche im Bereich von 2 - 5;
(D) 0-10 Gew.-% Additive;
wobei sich die Komponenten (A)-(D) auf 100 Gew.-% ergänzen.

2. Polyamidformmasse nach Anspruch 1, **dadurch gekennzeichnet, dass** der Anteil der Komponente (A) im Bereich von 22-38 Gew.-% liegt,
und/oder dass Komponente (A) ausschliesslich aus PA612 besteht.

3. Polyamidformmasse nach einem der vorhergehenden Ansprüche, **dadurch gekennzeichnet, dass** das aliphatische Polyamid der Komponente (A) eine Lösungsviskosität ηᵣₑₗ im Bereich von 1.5-2.0, bevorzugt 1.6-1.85 gemessen an Lösungen von 0,5 g Polymer gelöst in 100 ml m-Kresol bei 20 °C, aufweist.

4. Polyamidformmasse nach einem der vorhergehenden Ansprüche, **dadurch gekennzeichnet, dass** der Anteil der Komponente (B) im Bereich von 7-13 Gew.-% liegt.

5. Polyamidformmasse nach einem der vorhergehenden Ansprüche, **dadurch gekennzeichnet, dass** das Polyamid der Komponente (B), vorzugsweise ausgewählt als wenigstens eines der Systeme 6I/6T oder DI/DT, eine Lösungsviskosität ηᵣₑₗ im Bereich von 1.45-1.75, bevorzugt im Bereich von 1.48-1.65, gemessen an Lösungen von 0,5 g Polymer gelöst in 100 ml m-Kresol bei 20 °C, aufweist,
und/oder dass die Komponente (B) ausschliesslich aus 6I/6T oder ausschliesslich aus MXD6 besteht.

6. Polyamidformmasse nach einem der vorhergehenden Ansprüche, **dadurch gekennzeichnet, dass** das Polyamid 6I/6T der Komponente (B), bezogen auf die Summe der 6T und 6I-Einheiten, einen Anteil an 6I-Einheiten im Bereich von 60-90 mol-%, vorzugsweise im Bereich von 65-80 mol-%, insbesondere vorzugsweise im Bereich von 65-75 mol-% aufweist
oder dass das Polyamid DI/DT der Komponente (B), bezogen auf die Summe der DT und DI-Einheiten, einen Anteil an DI-Einheiten im Bereich von 60-90 mol-%, vorzugsweise im Bereich von 65-80 mol-%, insbesondere vorzugsweise im Bereich von 65-75 mol-% aufweist
oder dass das Polyamid DI/6T der Komponente (B), bezogen auf die Summe der T und I enthaltenden Einheiten, einen Anteil an I-Einheiten im Bereich von 60-90 mol-%, vorzugsweise im Bereich von 65-80 mol-%, insbesondere vorzugsweise im Bereich von 65-75 mol-% aufweist.

7. Polyamidformmasse nach einem der vorhergehenden Ansprüche, **dadurch gekennzeichnet, dass** das Verhältnis der Komponente (A) zur Komponente (B) im Bereich von 2.7:1 bis 5:1, vorzugsweise im Bereich von 2.8:1 bis 4:1 liegt, insbesondere bevorzugt im Bereich von 2.9:1 bis 3.1:1.

8. Polyamidformmasse nach einem der vorhergehenden Ansprüche, **dadurch gekennzeichnet, dass** der Anteil der Komponente (C) im Bereich von 50-70 Gew.-% liegt.

9. Polyamidformmasse nach einem der vorhergehenden Ansprüche, **dadurch gekennzeichnet, dass** das Abmessungsverhältnis der Haupt-Querschnittsachse zur Neben-Querschnittsachse dieser Querschnittsfläche der Glasfaser der Komponente (C) im Bereich von 2.5-4.5 liegt, vorzugsweise im Bereich von 2.8-4.2, insbesondere vorzugsweise im Bereich von 2.9-3.2.

10. Polyamidformmasse nach einem der vorhergehenden Ansprüche, **dadurch gekennzeichnet, dass** die Glasfasern der Komponente (C) eine Neben-Querschnittsachse einer Länge im Bereich von 5-10 µm und eine Haupt-Querschnittsachse einer Länge im Bereich von 15-30 µm aufweisen.

11. Polyamidformmasse nach einem der vorhergehenden Ansprüche, **dadurch gekennzeichnet, dass** es sich bei den Glasfasern der Komponente (C) um E-Glasfasern handelt, vorzugsweise in Form von Schnittglas mit einer Länge im Bereich von 0.2-20 mm, insbesondere vorzugsweise einer Länge im Bereich von 1-5 mm.

12. Polyamidformmasse nach einem der vorhergehenden Ansprüche, **dadurch gekennzeichnet, dass** als Komponente (D) Additive aus der folgenden Gruppe ausgewählt sind: anorganische Stabilisatoren, organische Stabilisatoren, Gleitmittel, Farbstoffe, Nukleierungsmittel, Metallflitter, halogenhaltige Flammschutzmittel, halogenfreie Flammschutzmittel, Schlagzähmodifikatoren, Antistatika, Leitfähigkeitsadditive, Entformungsmittel, optische Aufheller, Haftvermittlern, Alterungsschutzmittel, Antioxidantien, Antiozonantien, Lichtschutzmittel, UV-Stabilisatoren, UV-Absorber, UV-Blocker, anorganische Hitzestabilisatoren, insbesondere auf Basis von Kupferhalogeniden und Alkalihalogeniden, organische Hitzestabilisatoren, Leitfähigkeitsadditive, optische Aufhellern, Verarbeitungshilfsmittel, Kristallisationsbeschleuniger, Kristallisationsverzögerer, Fliesshilfsmittel, Gleitmittel, Entformungsmittel, faserförmige Zuschlagstoffe verschieden von Komponente (C) einschliesslich Kohlenstofffasern, Metallfasern, Aramidfasern, Nanotubes, , insbesondere Carbon Nanotubes (CNT), Whiskers, Glasfasern mit runder Querschnittsfläche, teilchenförmige Zuschlagsstoffe einschliesslich Russ, Silikate, einschliesslich natürliche Schichtsilikate, synthetische Schichtsilikate, einschliesslich Eisenaluminiumsilikat- und/oder Natriumaluminiumsilikat-Partikel, metallische Pigmente, Talk, Glimmer, Quarz, Quarzmehl, gemahlenes Glas, gemahlene Glasfasern, Glasschuppen, Glasflocken, Titandioxid, Zinksulfid, Wollastonit, Kaolin, Kieselsäuren, Magnesiumcarbonat, Magnesiumhydroxid, Kreide, gemahlenes oder gefälltes Calciumcarbonat, Kalk, Feldspat, Bariumsulfat, permanentmagnetische oder magnetisierbare Metalle oder Legierungen, Glaskugeln, Hohlglaskugeln, hohlkugeligen Silikatfüllstoffe, anorganische Pigmente, wie insbesondere Eisenoxid, Eisenmanganoxid, Metallpulver einschliesslich Eisenpulver, Kupferpulver, Aluminiumpulver, Metallflocken einschliesslich Aluminiumflocken, Eisenflocken, metallbeschichtete Füllstoffe, Metalloxide, einschliesslich Spinelle, wie insbesondere Kupfereisenspinell, Kupferchromoxid, Kupferchromit (CuCr2O4), Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metalle oder Legierungen bzw. Keramiken, hohlkugelige Silikatfüllstoffen, Aluminiumoxid, Bornitrid, Borcarbid, Aluminiumnitrid, Calciumfluorid und Mischungen oder oberflächenbehandelte Formen davon.

13. Verfahren zur Herstellung einer Polyamidformmasse nach einem der vorhergehenden Ansprüche, insbesondere auf einer Compoundieranlage mit einer Zylindertemperatur im Bereich von 260-320 °C, **dadurch gekennzeichnet, dass** wobei zunächst die Komponenten (A) und (B) sowie gegebenenfalls Polymere der Komponente (D) aufgeschmolzen werden und dann die Komponente (C) sowie gegebenenfalls die Komponente (D) hinzugefügt werden.

14. Verwendung einer Formmasse nach einem der Ansprüche 1-12 mit einer Wasseraufnahme von unter 2.5 %, vorzugsweise unter 2 %, jeweils gemessen bei 23 °C und 100 % relative Luftfeuchtigkeit, zur Herstellung von Formkörpern, insbesondere von Spritzgussteilen.

15. Formkörper erhalten oder erhältlich aus einer Polyamidformmasse gemäss einem der Ansprüche 1-12, bevorzugt in Form eines Gehäuses, insbesondere eines Gehäuses für ein tragbares Gerät, insbesondere bevorzugt einen Computer, Tablet Computer, Fotoapparat, Kommunikationsgerät, Ortungsgerät, Mobiltelefon, Phablet oder Teile davon.

## Claims

1. Reinforced polyamide moulding composition composed of the following components:
(A) from 20-45% by weight of aliphatic polyamide selected from the group consisting of: PA 610, PA 612 and mixtures thereof;
(B) from 5-15% by weight of semiaromatic polyamide selected from the group consisting of: 6I, DI, 6I/6T, DI/DT, DI/6T, MXD6 and mixtures thereof;
(C) from 45-75% by weight of flat glass fibres with non-circular cross section, where the dimensional ratio of the major cross-sectional axis to the minor cross-sectional axis of the said cross section is in the range from 2 - 5;
(D) from 0-10% by weight of additives;
where components (A)-(D) give a total of 100% by weight.

2. Polyamide moulding composition according to Claim 1, **characterized in that** the proportion of component (A) is in the range from 22-38% by weight,
and/or that component (A) is composed exclusively of PA612.

3. Polyamide moulding composition according to either of the preceding claims, **characterized in that** the solution viscosity ηᵣₑₗ of the aliphatic polyamide of component (A), measured on solutions of 0.5 g of polymer in 100 ml of m-cresol at 20°C, is in the range from 1.5-2.0, preferably from 1.6-1.85.

4. Polyamide moulding composition according to any of the preceding claims, **characterized in that** the proportion of component (B) is in the range from 7-13% by weight.

5. Polyamide moulding composition according to any of the preceding claims, **characterized in that** the solution viscosity ηᵣₑₗ of the polyamide of component (B), preferably selected to be at least one of 6I/6T or DI/DT, measured on solutions of 0.5 g of polymer in 100 ml of m-cresol at 20°C, is in the range from 1.45-1.75, preferably in the range from 1.48-1.65, and/or that component (B) is composed exclusively of 6I/6T or exclusively of MXD6.

6. Polyamide moulding composition according to any of the preceding claims, **characterized in that** the proportion of 6I units in the polyamide 6I/6T of component (B), based on the entirety of the 6T and 6I units, is in the range from 60-90 mol%, preferably in the range from 65-80 mol%, particularly preferably in the range from 65-75 mol%
or that the proportion of DI units in the polyamide DI/DT of component (B), based on the entirety of the DT and DI units, is in the range from 60 to 90 mol%, preferably in the range from 65 to 80 mol%, particularly preferably in the range from 65 to 75 mol%,
or that the proportion of I containing units in the polyamide DI/6T of component (B), based on the entirety of the T and I containing units, is in the range from 60 to 90 mol%, preferably in the range from 65 to 80 mol%, particularly preferably in the range from 65 to 75 mol%..

7. Polyamide moulding composition according to any of the preceding claims, **characterized in that** the ratio of component (A) to component (B) is in the range from 2.7:1 to 5:1, preferably in the range from 2.8:1 to 4:1, particularly preferably in the range from 2.9:1 to 3.1:1.

8. Polyamide moulding composition according to any of the preceding claims, **characterized in that** the proportion of component (C) is in the range from 50-70% by weight.

9. Polyamide moulding composition according to any of the preceding claims, **characterized in that** the dimensional ratio of the major cross-sectional axis to the minor cross-sectional axis of the said cross section of the glass fibre of component (C) is in the range from 2.5-4.5, preferably in the range from 2.8-4.2, particularly preferably in the range from 2.9-3.2.

10. Polyamide moulding composition according to any of the preceding claims, **characterized in that** in the glass fibres of component (C) the length of the minor cross-sectional axis is in the range from 5-10 µm and the length of the major cross-sectional axis is in the range from 15-30 µm.

11. Polyamide moulding composition according to any of the preceding claims, **characterized in that** the glass fibres of component (C) are E glass fibres, preferably in the form of chopped glass of length in the range from 0.2-20 mm, particularly preferably of length in the range from 1-5 mm.

12. Polyamide moulding composition according to any of the preceding claims, **characterized in that** additives from the following group are selected as component (D): inorganic stabilizers, organic stabilizers, lubricants, dyes, nucleating agents, metal flakes, halogen-containing flame retardants, halogen-free flame retardants, impact modifiers, antistatic agents, conductivity additives, mould-release agents, optical brighteners, adhesion promoters, ageing inhibitors, antioxidants, antiozonants, light stabilizers, UV stabilizers, UV absorbers, UV blockers, inorganic heat stabilizers, in particular based on copper halides and alkali metal halides, organic heat stabilizers, conductivity additives, optical brighteners, processing aids, crystallization accelerators, crystallization retarders, flow aids, lubricants, mould-release agents,
added fibrous materials differing from component (C) inclusive of carbon fibres, metal fibres, aramid fibres, nanotubes, in particular carbon nanotubes (CNT), whiskers, glass fibres with round cross section,
added particulate materials inclusive of carbon black, silicates, inclusive of natural phyllosilicates, synthetic phyllosilicates, inclusive of iron aluminium silicate particles and/or sodium aluminium silicate particles, metallic pigments, talc, mica, quartz in powdered and other forms, ground glass, ground glass fibres, glass flakes, titanium dioxide, zinc sulphide, wollastonite, kaolin, silicas, magnesium carbonate, magnesium hydroxide, chalk, ground or precipitated calcium carbonate, lime, feldspar, barium sulphate, permanent-magnetic or magnetizeable metals or alloys, hollow and solid glass beads, hollow-bead silicate fillers, inorganic pigments, particularly iron oxide, iron manganese oxide, metal powders inclusive of iron powder, copper powder, aluminium powder, metal flakes inclusive of aluminium flakes, iron flakes, metal-coated fillers, metal oxides, inclusive of spinels, particularly copper iron spinel, copper chromium oxide, copper chromite (CuCr2O4), zinc iron oxide, cobalt chromium oxide, cobalt aluminium oxide, magnesium aluminium oxide, copper chromium manganese mixed oxides, copper manganese iron mixed oxides, nickel antimony titanate, chromium antimony titanate, hard and soft magnetic metals and alloys and, respectively, ceramics, hollow-bead silicate fillers, aluminium oxide, boron nitride, boron carbide, aluminium nitride, calcium fluoride and mixtures and surface-treated forms thereof.

13. Process for the production of a polyamide moulding composition according to any of the preceding claims, particularly in a compounding system with a barrel temperature in the range from 260-320°C, **characterized in that** components (A) and (B), and also optionally polymers of component (D), are first melted and then component (C), and also optionally component (D), is added.

14. Use of a moulding composition according to any of Claims 1-12 with water absorption, measured at 23°C and 100% relative humidity, of less than 2.5%, preferably less than 2%, for the production of mouldings, in particular of injection mouldings.

15. Mouldings obtained or obtainable from a polyamide moulding composition according to any of Claims 1-12, preferably in the form of a housing, particularly of a housing for a portable device, a tablet computer or other computer, camera, communication device, position-finding device, mobile telephone, phablet or parts thereof.

## Revendications

1. Matériau de moulage polyamide renforcé constitué par les composants suivants :
(A) 20 à 45 % en poids d'un polyamide aliphatique choisi dans le groupe constitué par : PA 610, PA 612 ou leurs mélanges ;
(B) 5 à 15 % en poids d'un polyamide partiellement aromatique choisi dans le groupe constitué par : 6I, DI, 6I/6T, DI/DT, DI/6T, MXD6 ou leurs mélanges ;
(C) 45 à 75 % en poids de fibres de verre plates ayant une surface de section transversale non circulaire et un rapport de dimension entre l'axe principal et l'axe secondaire de cette surface de section transversale dans la plage allant de 2 à 5 ;
(D) 0 à 10 % en poids d'additifs ;
la somme des composants (A) à (D) étant de 100 % en poids.

2. Matériau de moulage polyamide selon la revendication 1, **caractérisé en ce que** la proportion du composant (A) se situe dans la plage allant de 22 à 38 % en poids, et/ou **en ce que** le composant (A) est exclusivement constitué par PA 612.

3. Matériau de moulage polyamide selon l'une quelconque des revendications précédentes, **caractérisé en ce que** le polyamide aliphatique du composant (A) présente une viscosité en solution ηᵣₑₗ dans la plage allant de 1,5 à 2,0, de préférence de 1,6 à 1,85, mesurée dans des solutions de 0,5 g de polymère dissous dans 100 ml de m-crésol à 20 °C.

4. Matériau de moulage polyamide selon l'une quelconque des revendications précédentes, **caractérisé en ce que** la proportion du composant (B) se situe dans la plage allant de 7 à 13 % en poids.

5. Matériau de moulage polyamide selon l'une quelconque des revendications précédentes, **caractérisé en ce que** le polyamide du composant (B), de préférence choisi en tant qu'au moins un des systèmes 6I/6T ou DI/DT, présente une viscosité en solution ηᵣₑₗ dans la plage allant de 1,45 à 1,75, de préférence dans la plage allant de 1,48 à 1,65, mesurée dans des solutions de 0,5 g de polymère dissous dans 100 ml de m-crésol à 20 °C,
et/ou **en ce que** le composant (B) est exclusivement constitué par 6I/6T ou exclusivement constitué par MXD6.

6. Matériau de moulage polyamide selon l'une quelconque des revendications précédentes, **caractérisé en ce que** le polyamide 6I/6T du composant (B) comprend, par rapport à la somme des unités 6T et 6I, une proportion d'unités 6I dans la plage allant de 60 à 90 % en moles, de préférence dans la plage allant de 65 à 80 % en moles, de manière particulièrement préférée dans la plage allant de 65 à 75 % en moles,
ou **en ce que** le polyamide DI/DT du composant (B) comprend, par rapport à la somme des unités DT et DI, une proportion d'unités DI dans la plage allant de 60 à 90 % en moles, de préférence dans la plage allant de 65 à 80 % en moles, de manière particulièrement préférée dans la plage allant de 65 à 75 % en moles,
ou **en ce que** le polyamide DI/6T du composant (B) comprend, par rapport à la somme des unités contenant T et I, une proportion d'unités I dans la plage allant de 60 à 90 % en moles, de préférence dans la plage allant de 65 à 80 % en moles, de manière particulièrement préférée dans la plage allant de 65 à 75 % en moles.

7. Matériau de moulage polyamide selon l'une quelconque des revendications précédentes, **caractérisé en ce que** le rapport entre le composant (A) et le composant (B) se situe dans la plage allant de 2, 7:1 à 5:1, de préférence dans la plage allant de 2,8:1 à 4:1, de manière particulièrement préférée dans la plage allant de 2,9:1 à 3,1:1.

8. Matériau de moulage polyamide selon l'une quelconque des revendications précédentes, **caractérisé en ce que** la proportion du composant (C) se situe dans la plage allant de 50 à 70 % en poids.

9. Matériau de moulage polyamide selon l'une quelconque des revendications précédentes, **caractérisé en ce que** le rapport de dimension entre l'axe principal et l'axe secondaire de la surface de section transversale des fibres de verre du composant (C) se situe dans la plage allant de 2,5 à 4,5, de préférence dans la plage allant de 2,8 à 4,2, de manière particulièrement préférée dans la plage allant de 2,9 à 3,2.

10. Matériau de moulage polyamide selon l'une quelconque des revendications précédentes, **caractérisé en ce que** les fibres de verre du composant (C) présentent un axe secondaire de section transversale d'une longueur dans la plage allant de 5 à 10 µm et un axe principal de section transversale d'une longueur dans la plage allant de 15 à 30 µm.

11. Matériau de moulage polyamide selon l'une quelconque des revendications précédentes, **caractérisé en ce que** les fibres de verre du composant (C) consistent en des fibres de verre E, de préférence sous la forme de verre coupé d'une longueur dans la plage allant de 0,2 à 20 mm, de manière particulièrement préférée d'une longueur dans la plage allant de 1 à 5 mm.

12. Matériau de moulage polyamide selon l'une quelconque des revendications précédentes, **caractérisé en ce qu'**en tant que composant (D), des additifs du groupe suivant sont choisis : les stabilisateurs inorganiques, les stabilisateurs organiques, les lubrifiants, les colorants, les agents de nucléation, les paillettes métalliques, les agents ignifuges halogénés, les agents ignifuges sans halogène, les modificateurs de la résistance aux impacts, les antistatiques, les additifs de conductivité, les agents de démoulage, les azurants optiques, les promoteurs d'adhésion, les agents antivieillissement, les antioxydants, les anti-ozone, les agents photoprotecteurs, les stabilisateurs UV, les absorbeurs UV, les agents bloquant les UV, les stabilisateurs thermiques inorganiques, notamment à base d'halogénures de cuivre et d'halogénures alcalins, les stabilisateurs thermiques organiques, les additifs de conductivité, les azurants optiques, les adjuvants d'usinage, les accélérateurs de cristallisation, les retardateurs de cristallisation, les adjuvants d'écoulement, les lubrifiants, les agents de démoulage, les additifs fibreux différents du composant (C), y compris les fibres de carbone, les fibres métalliques, les fibres d'aramide, les nanotubes, notamment les nanotubes de carbone (CNT), les trichites, les fibres de verre de surface de section transversale ronde, les additifs particulaires, y compris le noir de carbone, les silicates, y compris les phyllosilicates naturels, les phyllosilicates synthétiques, y compris les particules de silicate de fer et d'aluminium et/ou de silicate de sodium et d'aluminium, les pigments métalliques, le talc, le mica, le quartz, la farine de quartz, le verre broyé, les fibres de verre broyées, les paillettes de verre, les flocons de verre, le dioxyde de titane, le sulfure de zinc, la wollastonite, le kaolin, les silices, le carbonate de magnésium, l'hydroxyde de magnésium, la craie, le carbonate de calcium broyé ou précipité, la chaux, le feldspath, le sulfate de baryum, les métaux ou alliages magnétiques permanents ou magnétisables, les billes de verre, les billes de verre creuses, les charges de silicate sous forme de billes creuses, les pigments inorganiques, tels que notamment l'oxyde de fer, l'oxyde de fer et de manganèse, les poudres de métaux, y compris la poudre de fer, la poudre de cuivre, la poudre d'aluminium, les flocons métalliques, y compris les flocons d'aluminium, les flocons de fer, les charges revêtus par des métaux, les oxydes de métaux, y compris les spinelles, tels que notamment le spinelle de cuivre et de fer, l'oxyde de cuivre et de chrome, le chromite de cuivre (CuCr₂O₄), l'oxyde de zinc et de fer, l'oxyde de cobalt et de chrome, l'oxyde de cobalt et d'aluminium, l'oxyde de magnésium et d'aluminium, les oxydes mixtes de cuivre, de chrome et de manganèse, les oxydes mixtes de cuivre, de manganèse et de fer, le titanate de nickel et d'antimoine, le titanate de chrome et d'antimoine, les métaux magnétiques durs ou mous ou les alliages ou les céramiques, les charges de silicate en forme de billes creuses, l'oxyde d'aluminium, le nitrure de bore, le carbure de bore, le nitrure d'aluminium, le fluorure de calcium et leurs mélanges ou formes traitées en surface.

13. Procédé de fabrication d'un matériau de moulage polyamide selon l'une quelconque des revendications précédentes, notamment dans une installation de mélange à une température de cylindre dans la plage allant de 260 à 320 °C, **caractérisé en ce que** les composants (A) et (B), ainsi qu'éventuellement des polymères du composant (D) sont tout d'abord fondus, puis le composant (C) et éventuellement le composant (D) sont ajoutés.

14. Utilisation d'un matériau de moulage selon l'une quelconque des revendications 1 à 12 ayant une absorption de l'eau inférieure à 2,5 %, de préférence inférieure à 2 %, à chaque fois mesurée à 23 °C et 100 % d'humidité relative de l'air, pour la fabrication de corps moulés, notamment de pièces moulées par injection.

15. Corps moulé obtenu ou pouvant être obtenu à partir d'un matériau de moulage polyamide selon l'une quelconque des revendications 1 à 12, de préférence sous la forme d'un boîtier, notamment d'un boîtier pour un appareil portable, de manière particulièrement préférée un ordinateur, une tablette, un appareil photo, un appareil de communication, un appareil de localisation, un téléphone portable, une phablette ou des parties de ceux-ci.
